(19) Europäisches Patentamt
European Patent Office
Office européen des brevets

(11) Veröffentlichungsnummer: **0 027 641**
**B1**

# (12) EUROPÄISCHE PATENTSCHRIFT

(45) Veröffentlichungstag der Patentschrift: **02.03.83**

(21) Anmeldenummer: **80106303.3**

(22) Anmeldetag: **16.10.80**

(51) Int. Cl.³: **C 08 G 59/56,** C 08 G 59/14, C 08 G 59/62, C 09 D 3/48, C 09 D 5/40, C 25 D 13/06

## (54) Polyadditionsprodukt und seine Verwendung.

(30) Priorität. **20.10.79 DE 2942488**

(43) Veröffentlichungstag der Anmeldung: **29.04.81 Patentblatt 81/17**

(45) Bekanntmachung des Hinweises auf die Patenterteilung: **02.03.83 Patentblatt 83/9**

(84) Benannte Vertragsstaaten: **AT BE CH DE FR GB IT LI NL SE**

(56) Entgegenhaltungen: **EP-A-0 002 499** **US-A-3 812 202**

(73) Patentinhaber: **BASF Aktiengesellschaft, Carl-Bosch-Strasse 38, D-6700 Ludwigshafen (DE)**

(72) Erfinder: **Schupp, Eberhard, Dr., Tilsiter Weg 4, D-6830 Schwetzingen (DE)**
Erfinder: **Kempter, Fritz Erdmann, Dr., L2,14, D-6800 Mannheim (DE)**
Erfinder: **Gulbins, Erich, Dr., Ladenburger Strasse 80, D-6900 Heidelberg-Neuenheim (DE)**

**EP 0 027 641 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Polyadditionsprodukt und seine Verwendung

Die vorliegende Erfindung betrifft stickstoffbasische Gruppen tragende Polyadditionsprodukte mit $\alpha,\beta$-olefinisch ungesättigten Amidomethylgruppen und deren Verwendung zur Herstellung von Überzügen, insbesondere ihre Verwendung als Bindemittel für die kathodische Elektrotauchlackierung von Metallteilen.

Es ist bekannt, daß Kunstharze, welche neben basischen Gruppen $\alpha,\beta$-ungesättigte Carbonsäureestergruppen enthalten (gemäß DE-A-2 429 527) durch Polymerisation der Doppelbindungen vernetzt werden. Derartige Produkte wurden u. a. in der DE-A-2 749 776 als kathodisch abscheidbare Bindemittel empfohlen.

Ein Nachteil dieser Produkte ist ihr Gehalt an Carbonsäureestergruppen, welche naturgemäß wenig verseifungsbeständig sind, was die Stabilität der wäßrigen Lackbäder beeinträchtigt und außerdem auf den Korrosionsschutz der mit diesen Lacken beschichteten Metallgegenstände nachteilige Auswirkungen hat.

Aufgabe der vorliegenden Erfindung ist es, verseifungsbeständige Polyadditionsprodukte aufzuzeigen, mit denen sich Überzüge mit verbessertem Korrosionsschutz erhalten lassen.

Gegenstand der vorliegenden Erfindung sind stickstoffbasische Gruppen tragende Polyadditionsprodukte mit einem mittleren Molekulargewicht zwischen 500 und 10 000, enthaltend an aromatische Ringe gebundene Gruppierungen der allgemeinen Formel (I)

$$-CH_2-NH-\overset{\overset{\displaystyle O}{\|}}{C}-CR^1{=}CHR^2 \qquad \text{(I)}$$

wobei $R^1$ und $R^2$ untereinander gleich oder verschieden sind und für Wasserstoff oder eine Methylgruppe stehen.

Die erfindungsgemäßen Polyadditionsprodukte können z. B. aus Mono- und/oder Polyphenolen, die Gruppierungen der allgemeinen Formel (I) tragen, Polyepoxiden und Aminen oder Aminsalzen hergestellt werden, wobei als Mono- und/oder Polyphenole mit Gruppierungen der allgemeinen Formel (I) im allgemeinen Umsetzungsprodukte aus Mono- und/oder Polyphenol und einer Verbindung der allgemeinen Formel (II)

$$X-CH_2-NH-\overset{\overset{\displaystyle O}{\|}}{C}-CR^1{=}CHR^2 \qquad \text{(II)}$$

worin X für OH, Halogen oder eine Alkoxygruppe mit 1 bis 8 Kohlenstoffatomen steht sowie $R^1$ und $R^2$ die für Formel (I) angegebene Bedeutung haben, verwendet werden können.

Gegenstand der vorliegenden Erfindung ist außerdem die Verwendung dieser Polyadditionsprodukte zur Herstellung von Überzügen sowie insbesondere in ihrer durch Zusatz von Säuren erhaltenen protonierten Form als Bindemittel für die kathodische Elektrotauchlackierung von Metallteilen.

Mit der Einführung von $\alpha,\beta$-olefinisch ungesättigten Amidomethylgruppen in stickstoffbasische Polyadditionsprodukte und die daraus durch Protonierung erhaltenen kathodisch abscheidbaren Harze wurde überraschenderweise eine Möglichkeit gefunden, zu verseifungsstabilen, über Polymerisation von Kohlenstoff-Kohlenstoff-Doppelbindungen vernetzenden Bindemitteln zu gelangen, welche sich durch eine große Stabilität der damit hergestellten wäßrigen Lackbäder und durch einen ausgezeichneten Korrosionsschutz der daraus abgeschiedenen Überzüge auszeichnen.

Bezüglich der Herstellung und Aufbaukomponenten der erfindungsgemäßen Polyadditionsverbindungen ist im einzelnen folgendes auszuführen:

Die $\alpha,\beta$-olefinisch ungesättigte Amidomethylgruppen tragenden Mono- und/oder Polyphenole tragen als Substituent am aromatischen Kern Gruppen der allgemeinen Formel

$$-CH_2-NH-\overset{\overset{\displaystyle O}{\|}}{C}-CR^1{=}CHR^2 \qquad \text{(I)}$$

wobei $R^1$ und $R^2$ gleiche oder verschiedene Reste bedeuten und für Wasserstoff oder eine Methylgruppe stehen. Bevorzugt sind Gruppen der Formel (I), bei denen $R^1$ Wasserstoff oder eine Methylgruppe und $R^2$ Wasserstoff bedeuten. Hergestellt werden können diese $\alpha,\beta$-ungesättigte Amidomethylgruppen tragenden Mono- und/oder Polyphenole aus Phenolen bzw. Polyphenolen und Verbindungen der Formel

$$X-CH_2-NH-\overset{\overset{\displaystyle O}{\|}}{C}-CR^1{=}CHR^2 \qquad \text{(II)}$$

wobei X für OH, Halogen, wie z. B. Chlor oder eine Alkoxygruppe mit 1 bis 8, vorzugsweise 1 bis 4 Kohlenstoffatomen, steht und $R^1$ und $R^2$ die oben angegebene Bedeutung haben.

Als Phenole sind Mono- und/oder Polyphenole, vor allem Diphenole der allgemeinen Formel

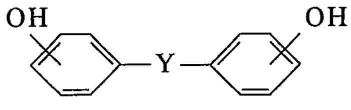

(III)

geeignet, wobei die OH-Gruppen in ortho- und/oder para-Stellung zu Y stehen, und Y für einen geradkettigen oder verzweigten zweiwertigen aliphatischen Rest mit 1 bis 3 Kohlenstoffatomen oder für $-SO_2-$, $-SO-$, $-S-$, $-CO-$ oder $-O-$ steht; vorzugsweise geeignet ist 2,2-Bis-p-hydroxyphenyl-propan (Bisphenol A).

Zur Einstellung des gewünschten Molekulargewichts der erfindungsgemäßen Bindemittel kann es vorteilhaft sein, einen Teil der Diphenole durch Monophenole zu ersetzen. Werden Epoxidharze mit mehr als zwei Epoxidgruppen oder polyfunktionelle Amine für die Herstellung der erfindungsgemäßen Polyadditionsverbindungen eingesetzt, so können auch Monophenole allein verwendet werden. Geeignete Monophenole sind z. B. Phenol, Kresole, o- bzw. p-tert. Butylphenol, Cardanol etc. Cardanol ist ein Naturprodukt und besteht aus einem Gemisch langkettiger 2-Alkylenphenole mit 13 bis 17 Kohlenstoffatomen im Alkylenrest, z. B. 3-(8,11-Pentadekadienyl)-phenol. Bedingt durch diese Alkylenketten führt die Mitverwendung von Cardanol zu Bindemitteln, mit denen besonders elastische Überzüge hergestellt werden können.

Die Umsetzung der Phenole mit den Verbindungen der Formel (II) kann in einem weiten Temperaturbereich zweckmäßigerweise in Gegenwart von Lösungsmittel, wie Toluol, Xylol, Isobutanol, Äthylglykol oder Äthylhexanol durchgeführt werden.

Bei Verwendung von starken Säuren wie HCl als Katalysatoren kann bei Temperaturen um 0°C gearbeitet werden, mit schwächer sauren Katalysatoren können Temperaturen bis etwa 160°C nötig sein. Besonders reaktionsfähige Verbindungen der Formel (II), z. B. N-Methylolacrylamid oder N-Methylolmethacrylamid, können mit manchen Phenolen auch ohne Katalysator umgesetzt werden. Auch ist es möglich, Verbindungen der Formel (II) in situ herzustellen und mit dem betreffenden Phenol umzusetzen. So lassen sich zum Beispiel Acrylamid oder Methacrylamid, Formaldehyd oder Formaldehyd liefernde Substanzen, wie Paraformaldehyd, und 2,2-Bis-p-hydroxyphenyl-propan in Isobutanol mit einem sauren Katalysator, wie Toluolsulfonsäure, zu dem entsprechenden Diphenol mit $\alpha,\beta$-olefinisch ungesättigter Amidomethylgruppe umsetzen. Die dabei entstehenden geringen Mengen an Methylenbisacrylamid stören nicht, da sie unter Einbrennbedingungen ebenfalls zur Vernetzung beitragen.

Bei der Umsetzung von Phenolen mit Verbindungen der Formel (II) kommt es zu einer Abspaltung von HX und einer Amidomethylierung am aromatischen Kern des Phenols. Derartige Reaktionen sind als Tscherniac-Einhorn-Reaktionen bekannt. Die Umsetzung von 2,2-Bis-p-hydroxyphenyl-propan mit N-Methylolacrylamid in Eisessig mit HCl als Katalysator ist in der US-A-3 839 447 beschrieben. Die auf diese Weise herstellbaren $\alpha,\beta$-olefinisch ungesättigte Amidomethylgruppen tragenden Diphenole können zur Herstellkng der erfindungsgemäßen Polyadditionsprodukte eingesetzt werden. Durch Mitverwendung von z. B. N-Methylol-fettsäureamiden können auf einfache Weise flexibilisierend wirkende Gruppen an die Phenole addiert werden.

Es können 0,3 bis 2,5 Mol der Verbindung der Formel (II) pro Äquivalent des Phenols (= phenolische OH-Gruppe) eingesetzt werden. Im allgemeinen sind jedoch 0,5 bis 1,5 Mol pro Äquivalent Phenol ausreichend, um eine optimale Vernetzungsdichte im fertigen Lackfilm zu erzielen.

Als Polyepoxidverbindungen können alle üblichen Epoxidharze eingesetzt werden, z. B. die Diglycidyläther von Bisphenol A, welche z. B. aus Bisphenol A und Epichlorhydrin in Gegenwart von Alkali hergestellt werden können. Auch die Polyglycidyläther von mehrwertigen Alkoholen mit einem Molekulargewicht des Polyglycidyläthers von 180—2500, z. B. die von Pentaerythrit, Glycerin, Trimethylolpropan, Äthylenglykol, Diäthylenglykol, Polyoxyäthylenglykole und Polyoxypropylenglykole mit Molekulargewichten von 200 bis 2000 und anderer mehrwertiger, vorzugsweise zwei- bis vierwertiger Alkohole, können verwendet werden.

Andere geeignete Polyepoxidverbindungen sind stickstoffhaltige Diepoxide, wie sie in der US-A-3 365 471 beschrieben sind, Epoxidharze aus 1,1-Methylen-bis-(5-substituiertem Hydantoin) nach der US-A-3 391 097, Diepoxide aus Bisimiden nach US-A-3 450 711, epoxydierte Aminomethyl-diphenyloxide nach US-A-3 312 664, heterocyclische N,N'-Diglycidylverbindungen nach US-A-3 503 979, Aminoepoxyphosphate nach GB-A-1 172 916 oder 1,3,5-Triglycidylisocyanurate und andere in der Technik gut bekannte Materialien, die Epoxidgruppen enthalten, wie z. B. Dicyclopentadiendioxid und Limonendioxid, sowie epoxidierte Butadienöle.

Auch Epoxidgruppen tragende Polyacrylate sind als Polyepoxidverbindungen zur Herstellung der erfindungsgemäßen Polyadditionsprodukte geeignet. Diese Harze lassen sich z. B. durch Mischpolymerisation eines ungesättigten epoxidhaltigen Monomeren, wie z. B. Glycidylacrylat oder -methacrylat, mit mindestens einem anderen ungesättigten Monomeren herstellen.

Es können auch anteilmäßig Monoepoxidverbindungen mitverwendet werden, sofern dies, z. B. zur

Einstellung des Molekulargewichts der Bindemittel, erwünscht ist. Glycidylester von langkettigen Carbonsäuren, wie z. B. ®Cardura E der Firma Shell oder Glycidyläther von langkettigen Alkoholen, können verwendet werden, falls das Bindemittel weichgemacht werden soll, was zu elastischeren Überzügen führt.

Das erfindungsgemäß zu verwendende Amin oder Aminsalz kann ein beliebiges primäres oder sekundäres Amin, z. B. ein solches der allgemeinen Formel

$H_2N—R^3$ bzw. 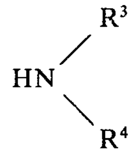

worin $R^3$ und $R^4$ gleiche oder verschiedene Alkylgruppen mit 1 bis 18 Kohlenstoffatomen, Äthanol-, Isopropanolreste bedeuten oder zusammen einen 5- oder 6-gliedrigen Ring bilden, oder ein tertiäres Aminsalz sein. Im letzteren Fall entstehen Bindemittel, welche quartäre Ammoniumgruppen enthalten.

Beispiele von primären oder sekundären Aminen, die eingesetzt werden können, sind Mono- und Dialkylamine, wie Methylamin, Äthylamin, Propylamin, Isopropylamin, Butylamin, Isobutylamin, s-Butylamin, Dimethylamin, Diäthylamin, Dipropylamin, Dibutylamin oder Pyrrolidin, Piperidin, Morpholin etc. Die Amine können auch zusätzliche funktionelle Gruppen, wie Hydroxylgruppen, tragen, z. B. Alkanolamine mit 2 bis 4 Kohlenstoffatomen in den Alkanolgruppen, wie Äthanolamin, Isopropanolamin, 3-Aminopropanol, Diäthanolamin oder Diisopropanolamin.

Auch Amine mit mehreren basischen Stickstoffatomen können eingesetzt werden, z. B. 3-Dimethylaminopropylamin, 3-Diäthylaminopropylamin, Piperazin oder N-Methylpiperazin. Im allgemeinen werden niedermolekulare Amine verwendet, doch können auch Amine mit höherem Molekulargewicht eingesetzt werden, insbesondere dann, wenn die weichmachende Wirkung dieser Amine erwünscht ist. Es kann auch eine Mischung von niedermolekularen und höhermolekularen Aminen eingesetzt werden.

Sollen Salze tertiärer Amine eingesetzt werden, so kommen vor allem Salze von solchen Aminen der allgemeinen Formel

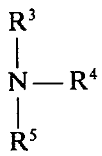

worin $R^3$ und $R^4$ die obengenannte Bedeutung haben und $R^5$ für eine Methylgruppe steht, in Betracht, welche also mindestens eine Methylgruppe enthalten. Beispiele sind Trimethylamin, Dimethyläthylamin, Dimethyläthanolamin, Methyldiäthanolamin und Dimethyldecylamin. Derartige Amine können als Salze der Kohlensäure oder Carbonsäuren, wie Essigsäure, Milchsäure oder Ameisensäure, eingesetzt werden.

Werden primäre oder sekundäre Amine eingesetzt, so ist es, um eine Addition dieser Amine an die $\alpha,\beta$-olefinisch ungesättigte Säureamidgruppe im Sinne einer Michaeladdition zu vermeiden, zweckmäßig, zunächst die Reaktion der Epoxidverbindung mit dem Amin durchzuführen und anschließend die restlichen Epoxidgruppen mit dem $\alpha,\beta$-olefinisch ungesättigten Amidomethylgruppen enthaltenden Phenol umzusetzen. Beide Reaktionen können bei leicht erhöhten Temperaturen von 30—150°C, vorzugsweise 60—90°C, durchgeführt werden.

Die Menge an eingesetztem Amin muß mindestens ausreichend sein, um das fertige Bindemittel nach teilweiser oder vollständiger Neutralisation mit einer Säure wasserdispergierbar zu machen. Im allgemeinen sind dazu mindestens 0,5 Äquivalente Amin pro 1000 g festes Bindemittel nötig, es können aber auch bis zu 2 Äquivalente Amin pro 1000 g Bindemittel zum Einsatz kommen.

Die Umsetzung des Amins mit der Polyepoxidverbindung kann, sofern es sich um eine bei der Reaktionstemperatur flüssige Polyepoxidverbindung handelt, lösungsmittelfrei durchgeführt werden. Es können aber auch Lösungsmittel verwendet werden, z. B. Kohlenwasserstoffe wie Benzol oder Toluol, Alkohole wie Isopropanol oder Isobutanol, Ätheralkohole wie Äthylenglykolmonoäthyläther oder Ketone, Äther, Ester. Die Amine können auch in Form ihrer kohlensauren Salze eingesetzt werden bzw. es kann unter Durchleiten von Kohlendioxid durch das Reaktionsgefäß gearbeitet werden. Dadurch können unter Umständen unerwünschte Nebenreaktionen, wie die Selbstkondensation der Polyepoxidverbindungen, zurückgedrängt werden.

Die Mengen an Polyepoxidverbindungen werden so gewählt, daß die nicht zur Reaktion mit dem Amin benötigten Epoxidgruppen ausreichen, um durch Reaktion mit den phenolischen OH-Gruppen der $\alpha,\beta$-olefinisch ungesättigten Amidomethylgruppen tragenden Mono- und/oder Polyphenole das für das Bindemittel gewünschte Molekulargewicht aufzubauen. Das Molekulargewicht der Bindemittel liegt im Bereich von etwa 500 bis 10 000, vorzugsweise 1000 bis 5000. Es ist nicht notwendig, sämtliche phenolische OH-Gruppen mit den Epoxidgruppen umzusetzen, umgekehrt ist es nicht notwendig, daß

sämtliche Epoxidgruppen umgesetzt werden. Im allgemeinen setzt man die $\alpha,\beta$-olefinisch ungesättigte Amidomethylgruppen tragenden Mono- und/oder Polyphenole mit den Polyepoxiden und Aminen oder Aminsalzen in Mengenverhältnissen von 15 : 16 : 1 bis 1 : 2 : 1, vorzugsweise 6 : 7 : 1 bis 1 : 2 : 1, berechnet in Äquivalenten von phenolischen Hydroxylgruppen zu Epoxid zu Amin um.

Die erfindungsgemäßen Polyadditionsprodukte können mit üblichen Lacklösungsmitteln, wie Alkoholen mit einer Kettenlänge von 3 bis 16 Kohlenstoffatomen, z. B. Isopropanol, Dekanol, n- und iso-Butanol, Alkylaromaten, z. B. Toluol und Cycloaliphaten, sowie mit (oligomeren) Glykolen und Glykoläthern oder wäßrigen organischen Lösungsmittelgemischen verdünnt, gegebenenfalls zusammen mit Pigmenten, Füllstoffen und bei der Verarbeitung von Lacken üblichen Hilfsmitteln unter Anwendung konventioneller Lackiermethoden, wie Spritzen, Tauchen, Fluten, auf das zu überziehende bzw. zu lackierende Substrat, wie z. B. auf Holz, Metall, Glas oder Keramik, aufgetragen, getrocknet und bei Temperaturen von über 170°C gehärtet werden. Die damit erhaltenen Überzüge zeichnen sich beispielsweise durch hohe Härte und Lösungsmittelbeständigkeit aus.

Die erfindungsgemäßen Polyadditionsprodukte lassen sich vorteilhaft auch durch Bestrahlen mit IR-, UV- und Elektronenstrahlen aushärten, wobei gegebenenfalls reaktive Verdünner, wie Mono- und Diacrylate, sowie bei UV-Härtung zweckmäßigerweise üblichen UV-Initiatoren, wie Benzoinäther oder Benzilketale mitverwendet werden.

Bevorzugt werden die erfindungsgemäßen Lackbindemittel jedoch mit Säuren, wie z. B. Phosphorsäure und ihren Derivaten, vorzugsweise mit wasserlöslichen Carbonsäuren, wie z. B. Essigsäure, Ameisensäure, Milchsäure, protoniert angewandt. Das protonierte Lackbindemittel ist wasserverdünnbar und kann unter Anwendung der oben angeführten konventionellen Lackiermethoden verarbeitet werden, wobei ebenfalls Überzüge mit sehr wertvollen Eigenschaften erhalten werden.

Die bevorzugte Verwendung der erfindungsgemäßen protonierten Polyadditionsprodukte ist ihre Verwendung als Lackbindemittel für die kathodische Elektrotauchlackierung elektrisch leitender Flächen, z. B. von Metallteilen, Blechen usw. aus Messing, Kupfer, Aluminium, Eisen und Stahl, die gegebenenfalls chemisch vorbehandelt, z. B. phosphatiert sind.

Die wäßrigen Lösungen oder Dispersionen der zumindest teilweise als Salz einer wasserlöslichen Carbonsäure vorliegenden erfindungsgemäßen Polyadditionsprodukte können auch im Gemisch mit diesen durch Kataphorese elektrochemisch abscheidbare Hilfsstoffe enthalten, wie Pigmente, z. B. Ruß, Talkum, Titandioxid, Kaolin, basisches Bleichromat, Eisenoxidpigmente etc., lösliche Farbstoffe, Lösungsmittel, Verlaufsverbesserer, Stabilisatoren, Härtungskatalysatoren, Antischaummittel sowie andere Hilfs- und Zusatzstoffe.

Zur kathodischen Elektrotauchlackierung wird im allgemeinen durch Verdünnen mit entionisiertem Wasser ein Feststoffgehalt des Elektrotauchbades von 5 bis 30 Gew.-% eingestellt. Die Abscheidung erfolgt im allgemeinen bei Temperaturen von 15 bis 40°C während einer Zeit von 1 bis 2 Minuten und bei pH-Bad-Werten von 4,0 bis 8,5, vorzugsweise pH 5,0 bis 7,5, bei Abscheidungsspannungen zwischen 50 und 500 Volt. Nach dem Abspülen des auf dem elektrisch leitenden Körper kathodisch abgeschiedenen Films wird dieser bei 140 bis 200°C 10 bis 30 Minuten, vorzugsweise bei 160 bis 180°C, ca. 20 Minuten gehärtet.

Die folgenden Beispiele sollen die Erfindung noch näher erläutern, ohne sie zu beschränken. Die in den Beispielen genannten Teile und Prozente sind Gewichtsteile und Gewichtsprozente.

Herstellung von Polyphenolen, die Gruppierungen der allgemeinen Formel (I) tragen ($\alpha,\beta$-olefinisch ungesättigte Amidomethylgruppen tragende Phenole, im folgenden kurz als ›Vorprodukte‹ bezeichnet):

## Vorprodukt 1

456 Teile Bisphenol A und 303 Teile Methylolacrylamid werden bei 50°C in 456 Teilen Essigsäure gelöst, anschließend auf 15°C abgekühlt und bei dieser Temperatur HCl-Gas bis zur Sättigung eingeleitet. Anschließend läßt man die Temperatur auf 25°C ansteigen, wobei leicht gekühlt werden muß. Nach 2 Stunden wird mit 2000 Teilen Methylenchlorid verdünnt und anschließend viermal mit je 2000 Teilen Wasser ausgeschüttelt. Schließlich wird noch einmal mit einer Lösung von 100 Teilen Natriumcarbonat in 2000 Teilen Wasser ausgeschüttelt und die organische Phase über Natriumsulfat getrocknet. Nach Abziehen des Lösungsmittels im Vakuum bei 80°C bleibt eine viskose, nahezu farblose Masse zurück.

## Vorprodukt 2

Eine Mischung aus 228 Teilen Bisphenol A, 177,5 Teilen Acrylamid, 75 Teilen Paraformaldehyd, 0,5 Teilen Toluolsulfonsäure und 230 Teilen Isobutanol wird unter Rühren zum Rückfluß erhitzt und innerhalb von 2 Stunden 30 Teile Wasser ausgekreist. Danach werden 72 Teile Isobutanol abdestilliert, wobei die Temperatur im Reaktionsgefäß auf 140°C ansteigt. Es wird gekühlt und mit 90 Teilen frischem Isobutanol verdünnt. Das Produkt hat einen Feststoffgehalt von 67%.

Vorprodukt 3

Eine Mischung aus 228 Teilen Bisphenol A, 106,5 Teilen Acrylamid, 45 Teilen Paraformaldehyd und 230 Teilen Isobutanol wird mit 1 Teil Toluolsulfonsäure versetzt und unter Rühren zum Rückfluß erhitzt. Innerhalb von 2 Stunden werden mit einem Wasserabscheider 20 Teile Wasser ausgekreist.

Vorprodukt 4

114 Teile Bisphenol A und 150 Teile Toluol werden auf 80°C erhitzt und danach 76 Teile Methylolacrylamid und 0,5 Teile Toluolsulfonsäure zugesetzt. Es wird zum Rückfluß erhitzt. In 90 Minuten werden dann ca. 13,5 Teile Wasser ausgekreist. Vom entstandenen zweiphasigen Produkt werden 55 Teile der oberen Phase, die aus fast reinem Toluol besteht, abdekantiert.

Vorprodukt 5

Es wird wie bei der Herstellung von Vorprodukt 1 verfahren; anstelle von 456 Teilen Bisphenol A werden jedoch 500 Teile Dihydroxydiphenylsulfon verwendet. Nach der Sättigung mit Salzsäure wird 6 Stunden auf 65°C erhitzt. Beim Ausschütteln mit Wasser wird zur Löslichkeitsvermittlung etwas Aceton zugesetzt.

Beispiel 1

1255 Teile eines handelsüblichen Epoxidharzes (Diglycidyläther aus Bisphenol A und Epichlorhydrin) mit einem Epoxidäquivalentgewicht von 189 werden mit 164 Teilen Isopropanol verdünnt und auf 60°C erhitzt. Innerhalb einer Stunde werden 220 Teile Diäthanolamin zugetropft, wobei die Temperatur durch gelegentliches Kühlen auf 60—65°C gehalten wird. Anschließend wird 2 Stunden bei 60°C gerührt. Zu 187,5 Teilen dieses Produktes werden 95 Teile Vorprodukt 1 und 55 Teile Isobutanol gegeben und die Mischung auf 80°C so lange erhitzt, bis die Viskosität, gemessen bei 75°C mit einem Platten-Konus-Viskosimeter, 4000 mPa · s beträgt, wozu etwa 4 Stunden benötigt werden. Anschließend werden 12 Teile Essigsäure und 100 Teile Wasser zugegeben und verrührt. Der Festgehalt des Harzes beträgt 58%. Durch Zugabe von entionisiertem Wasser wird daraus ein Elektrotauchbad von 10% Feststoffgehalt und einem pH-Wert von 5,4 hergestellt. Zur Verlaufsverbesserung werden auf 1 Liter Tauchbad 10 Teile Äthylhexanol zugesetzt und das Bad 24 Stunden bei 25°C gerührt.

Mit Zinkphosphat phosphatierte, wassergespülte und luftgetrocknete Stahlbleche werden, als Kathode geschaltet, in diesem Bad mit 180 V/25°C 2 Minuten beschichtet und 20 Minuten bei 180°C eingebrannt. Die Schichtstärke beträgt 15 µm. Die Korrosionsprüfung nach dem ASTM-Salzsprühtest (DIN SS 50021) ergibt nach 336 Stunden eine Unterwanderung am Schnitt von weniger als 1 mm.

Beispiel 2

1255 Teile des in Beispiel 1 verwendeten Epoxidharzes werden mit 164 Teilen Isopropanol und 16 Teilen Wasser verdünnt. Bei 60°C werden innerhalb von 1 Stunde 220 Teile Diäthanolamin zugetropft, wobei gleichzeitig Kohlendioxid durch die Lösung geleitet wird. Es wird noch 2 Stunden bei 60—62°C nachgerührt.

Von diesem Produkt werden 375 Teile mit 336 Teilen des Vorproduktes 2 und 96,5 Teilen Isopropanol gemischt und so lange auf 80°C erhitzt, bis die Viskosität, gemessen bei 75°C mit einem Platten-Konus-Viskosimeter, 4000 mPa · s beträgt, wozu etwa 6 Stunden benötigt werden. Anschließend werden 25 Teile Essigsäure und 150 Teile Wasser zugegeben. Das Produkt hat einen Feststoffgehalt von ca. 58%. Durch Zugabe von 60 Teilen Äthylhexanol und 4650 Teilen entionisiertem Wasser wird daraus ein Elektrotauchbad mit 10% Feststoffgehalt und einem pH-Wert von 5,4 hergestellt. Bei 25°C werden mit 260 V sowohl zinkphosphatierte Stahlbleche ohne Chromsäure-Nachbehandlung als auch nichtphosphatierte, blanke Stahlbleche 2 Minuten kathodisch beschichtet und bei 180°C 20 Minuten eingebrannt. Die Schichtstärke auf dem zinkphosphatierten Blech beträgt 11 µm und auf dem blanken Blech 20 µm. Die Korrosionsprüfung nach dem ASTM-Salzsprühtest (DIN SS 50021) ergibt nach 480 Stunden eine Unterwanderung am Schnitt von 1 mm beim phosphatierten Blech und 3 mm beim blanken Blech.

Beispiel 3

Zu 590 Teilen Vorprodukt 3 werden 786 Teile des im Beispiel 2 verwendeten Umsetzungsproduktes aus Epoxidharz und Diäthanolamin und außerdem 108 Teile Isopropanol gegeben und so lange auf 75°C erhitzt, bis die Viskosität, gemessen bei 75°C, auf 4000 mPa · s angestiegen ist, wozu etwa

4 Stunden benötigt werden. Anschließend werden 50 Teile Essigsäure und 500 Teile Wasser zugesetzt.

Zu 196 Teilen dieser Mischung werden 25 Teile einer Schwarzpaste gemäß DE-B-2 606 831, Beispiel 1b, und 10 Teile Äthylhexanol gegeben und mit Wasser auf 1000 Teile aufgefüllt. Das Bad wird über Nacht bei 25°C gerührt. Zinkphosphatierte und rohe Stahlbleche werden mit 230 V bei 25°C 2 Minuten beschichtet und 20 Minuten bei 180°C eingebrannt. Der ASTM-Salzsprühtest ergibt nach 240 Stunden auf phosphatierten Blechen eine Unterwanderung von 0—1 mm bei 15 µm Schichtstärke und auf rohen Blechen 1 mm bei 16—17 µm Schichtstärke.

## Patentansprüche

1. Stickstoffbasische Gruppen tragendes Polyadditionsprodukt mit einem mittleren Molekulargewicht zwischen 500 und 10 000, enthaltend an aromatischen Ringe gebundene Gruppierungen der allgemeinen Formel (I)

$$-CH_2-NH-\overset{\overset{\displaystyle O}{\|}}{C}-CR^1{=}CHR^2 \qquad (I)$$

wobei $R^1$ und $R^2$ untereinander gleich oder verschieden sind und für Wasserstoff oder eine Methylgruppe stehen.

2. Polyadditionsprodukt nach Anspruch 1, dadurch gekennzeichnet, daß es aus Mono- und/oder Polyphenolen, die Gruppierungen der allgemeinen Formel (I) tragen, Polyepoxidverbindungen und Aminen oder Aminsalzen hergestellt worden ist.

3. Polyadditionsprodukt nach Anspruch 2, dadurch gekennzeichnet, daß als Mono- und/oder Polyphenole mit Gruppierungen der allgemeinen Formel (I) ein Umsetzungsprodukt aus Mono- und/oder Polyphenol und einer Verbindung der allgemeinen Formel (II)

$$X-CH_2-NH-\overset{\overset{\displaystyle O}{\|}}{C}-CR^1{=}CHR^2 \qquad (II)$$

verwendet wird, wobei X für OH, Halogen oder eine Alkoxygruppe mit 1 bis 8 Kohlenstoffatomen steht, $R^1$ und $R^2$ untereinander gleich oder verschieden sind und für Wasserstoff oder eine Methylgruppe stehen.

4. Polyadditionsprodukt nach Anspruch 3, dadurch gekennzeichnet, daß als Verbindung der allgemeinen Formel (II) N-Methylol(meth)acrylamid verwendet wird.

5. Polyadditionsprodukt nach Anspruch 4, dadurch gekennzeichnet, daß anstatt N-Methylol-(meth)acrylamid ein Gemisch aus Acrylamid oder Methacrylamid und Formaldehyd oder Formaldehyd liefernden Substanzen in Gegenwart eines sauren Katalysators verwendet wird.

6. Polyadditionsprodukt nach einem der Ansprüche 2 bis 5, dadurch gekennzeichnet, daß als Polyphenol 2,2-Bis-p-hydroxyphenyl-propan (Bisphenol A) verwendet wird.

7. Polyadditionsprodukt nach einem der Ansprüche 2 bis 6, dadurch gekennzeichnet, daß als Polyepoxidverbindungen Diglycidyläther des Bisphenols A, erhalten aus Bisphenol A und Epichlorhydrin verwendet werden.

8. Verwendung der Polyadditionsprodukte nach einem der vorhergehenden Ansprüche, gegebenenfalls nach Protonierung mit Säuren, als Bindemittel zur Herstellung von Überzügen.

9. Verwendung der Polyadditionsprodukte nach einem der Ansprüche 1 bis 7 nach Protonierung mit Säure als Bindemittel für die kathodische Elektrotauchlackierung von Metallteilen.

## Claims

1. A polyadduct, which possesses nitrogen-basic groups, has a mean molecular weight of from 500 to 10 000, and contains groups, attached to aromatic rings, of the general formula (I)

$$-CH_2-NH-\overset{\overset{\displaystyle O}{\|}}{C}-CR^1{=}CHR^2 \qquad (I)$$

where $R^1$ and $R^2$ are identical or different and each is hydrogen or methyl.

2. A polyadduct as claimed in claim 1, which has been prepared from a monophenol and/or polyphenol which possesses groups of the general formula (I), a polyepoxide compound and an amine or amine salt.

3. A polyadduct as claimed in claim 2, wherein a reaction product of a monophenol and/or polyphenol and a compound of the general formula (II)

$$X-CH_2-NH-\overset{\overset{\displaystyle O}{\|}}{C}-CR^1=CHR^2 \qquad \text{(II)}$$

where X is OH, halogen or alkoxy of 1 to 8 carbon atoms and $R^1$ and $R^2$ are identical or different and each is hydrogen or methyl, is used as the monophenol and/or polyphenyl possessing groups of the general formula (I).

4. A polyadduct as claimed in claim 3, wherein N-methylolacrylamide or N-methylolmethacrylamide is used as the compound of the general formula (II).

5. A polyadduct as claimed in claim 4, wherein a mixture of acrylamide or methacrylamide and formaldehyde or a formaldehyde donor in the presence of an acidic catalyst is used instead of the N-methylolacrylamide or N-methylolmethacrylamide.

6. A polyadduct as claimed in any of claims 2 to 5, wherein 2,2-bis-p-hydroxyphenyl-propane (bisphenol A) is used as the polyphenol.

7. A polyadduct as claimed in any of claims 2 to 6, wherein a diglycidyl ether of bisphenol A, obtained from bisphenol A and epichlorohydrin, is used as the polyepoxide compound.

8. Use of a polyadduct as claimed in any of the preceding claims, with or without protonization with an acid, as a binder for the production of coatings.

9. Use of a polyadduct as claimed in any of claims 1 to 7, after protonization with an acid, as a binder for the cathodic electrocoating of metal articles.

**Revendications**

1. Produit de polyaddition portant des groupes basiques azotés, d'un poids moléculaire moyen compris entre 500 et 10 000, et contenant des groupements liés à des noyaux aromatiques et de formule générale (I)

$$-CH_2-NH-\overset{\overset{\displaystyle O}{\|}}{C}-CR^1=CHR^2 \qquad \text{(I)}$$

$R^1$ et $R^2$ étant identiques ou différents et représentant l'hydrogène ou un groupe méthyle.

2. Produit de polyaddition selon la revendication 1, caractérisé par le fait qu'il a été préparé à partir de mono- et/ou de polyphénols, qui portent des groupements de formule générale (I), de composés polyépoxy et d'amines ou sels d'amine.

3. Produit de polyaddition selon la revendication 2, caractérisé par le fait qu'on utilise, comme mono- et/ou polyphénols à groupements de formule générale (I), un produit de réaction de mono- et/ou polyphénol et d'un composé de formule générale (II):

$$X-CH_2-NH-\overset{\overset{\displaystyle O}{\|}}{C}-CR^1=CHR^2 \qquad \text{(II)}$$

X représentant OH, halogène, ou un groupe alcoxy ayant 1 à 8 atomes de carbone, $R^1$ et $R^2$ étant identiques ou différents et représentant l'hydrogène ou un groupe méthyle.

4. Produit de polyaddition selon la revendication 3, caractérisé par le fait qu'on utilise, comme composé de formule générale (II) un N-méthylol (meth)acrylamide.

5. Produit de polyaddition selon la revendication 4, caractérisé par le fait qu'au lieu de N-Méthylol (meth)acrylamide, on utilise un mélange d'acrylamide ou méthacrylamide et de formaldéhyde ou de substances fournissant du formaldéhyde, en présence d'un catalyseur acide.

6. Produit de polyaddition selon l'une des revendications 2 à 5, caractérisé par le fait qu'on utilise, comme polyphénol, du 2,2-bis-p-hydroxyphényl-propane (bisphénol A).

7. Produit de polyaddition selon l'une des revendications 2 à 6, caractérisé par le fait qu'on utilise, comme composés polyépoxy, du diglycidyléther de bisphénol A, obtenu à partir de bisphénol A et d'épichlorhydrine.

8. Utilisation des produits de polyaddition selon l'une des revendications précédentes, éventuellement après protonisation avec des acides, comme liant pour la préparation de revêtements.

9. Utilisation de produits de polyaddition selon l'une des revendications 1 à 7, après protonisation avec des acides, comme liant pour peinture par électrodéposition cathodique de pièces métalliques.